Europäisches Patentamt

European Patent Office

Office européen des brevets

(19)

(11) Veröffentlichungsnummer: **0 242 755**
**A2**

(12) # EUROPÄISCHE PATENTANMELDUNG

(21) Anmeldenummer: **87105421.9**

(22) Anmeldetag: **11.04.87**

(51) Int. Cl.⁴: **B60C 11/18 , B60C 11/00**

(30) Priorität: **25.04.86 DE 3614055**

(43) Veröffentlichungstag der Anmeldung:
**28.10.87 Patentblatt 87/44**

(84) Benannte Vertragsstaaten:
**AT BE CH DE ES FR GB GR IT LI LU NL SE**

(71) Anmelder: **Continental Gummi-Werke
Aktiengesellschaft
Königsworther Platz 1 Postfach 169
D-3000 Hannover 1(DE)**

(72) Erfinder: **Theusner, Martin, Dr.
Franzburger Strasse 13
D-3007 Gehrden(DE)**
Erfinder: **Holzbach, Wolfgang, Dr.
Landwehrriehte 15
D-3008 Garbsen 9(DE)**
Erfinder: **de Vries, Gerhard, Dr.
Im Hespe 36
D-3008 Garbsen 4(DE)**

(54) **Fahrzeugluftreifen.**

(57) Die Erfindung betrifft einen Fahrzeugluftreifen mit einem Laufstreifen, wobei die beiden Randabschnitte des Laufstreifens gegenüber dem dazwischen befindlichen Abschnitt aus unterschiedlichen Gummimischungen bestehen. Um einen für die Winterverwendung geeigneten Reifen zu schaffen, der auch für hohe Geschwindigkeiten geeignet ist, ist erfindungsgemäß der in der Mitte des Laufstreifens gelegene Abschnitt auf einem Verbindungssteg der beiden Randabschnitte des Laufstreifens angeordnet, wobei der mittig angeordnete Abschnitt aus Naturkautschuk und die beiden Randabschnitte sowie der erwähnte Verbindungssteg aus Synthesekautschuk bestehen.

EP 0 242 755 A2

## Fahrzeugluftreifen

Die Erfindung betrifft einen Fahrzeugluftreifen mit einem Laufstreifen, wobei die beiden Randabschnitte des Laufstreifens gegenüber dem dazwischen befindlichen Abschnitt aus unterschiedlichen Gummimischungen bestehen.

Unter Gummimischungen werden hierbei auch solche Werkstoffe verstanden, die von gummiähnlichen Kunststoffen gebildet sind.

Bei bekannten Fahrzeugluftreifen der obigen Art besteht der Laufstreifen über seine gesamte Wandstärke hinweg aus den vorerwähnten unterschiedlichen Gummimischungen. Demgemäß wird der Laufstreifen gewissermaßen von nebeneinanderliegenden Abschnitten unterschiedlicher Gummimischungen gebildet, wobei die Abschnitte ausschließlich über ihre seitlichen Flächen miteinander in Berührung stehen.

Der Erfindung liegt die Aufgabe zugrunde, Fahrzeugluftreifen der obigen Art so zu verbessern, daß das Anwendungsgebiet der Reifen erweitert werden kann, ohne befürchten zumüssen, daß bestimmte Gummimischungen zu Nachteilen führen, wenn der Fahrzeugluftreifen anderen Verwendungen zugeführt wird.

Demgemäß strebt die Erfindung auch einen Fahrzeugluftreifen an, der für die Winterverwendung geeignet ist und zugleich vergleichsweise hohe Geschwindigkeiten zuläßt, obwohl Kautschukmischungen verwendet werden, die für die Winterverwendung günstig sind, höhere Geschwindigkeiten im Regelfalle jedoch nicht zulassen.

Zur Lösung dieser Aufgabe ist erfindungsgemäß der mittig, also der in der Mitte des Laufstreifens gelegene Abschnitt auf einem Verbindungssteg der beiden Randabschnitte des Laufstreifens angeordnet, wobei zweckmäßigerweise der mittig angeordnete Abschnitt des Laufstreifens aus Naturkautschuk, die beiden Randabschnitte und der erwähnte Verbindungssteg hingegen aus Synthesekautschuk gefertigt sind.

Mit Vorteil hat der mittig gelegene Abschnitt eine Wandstärke, die der sogenannten Gravierungstiefe des Reifenprofils entspricht. Der bei der Winterverwendung sehr griffige Naturkautschuk des Mittelabschnitts hat daher nur eine vergleichsweise kleine Wandstärke, während der wärmebeständigere Synthesekautschuk für die seitlichen Abschnitte und den Verbindungssteg eine höhere Wärmebeanspruchung zuläßt.

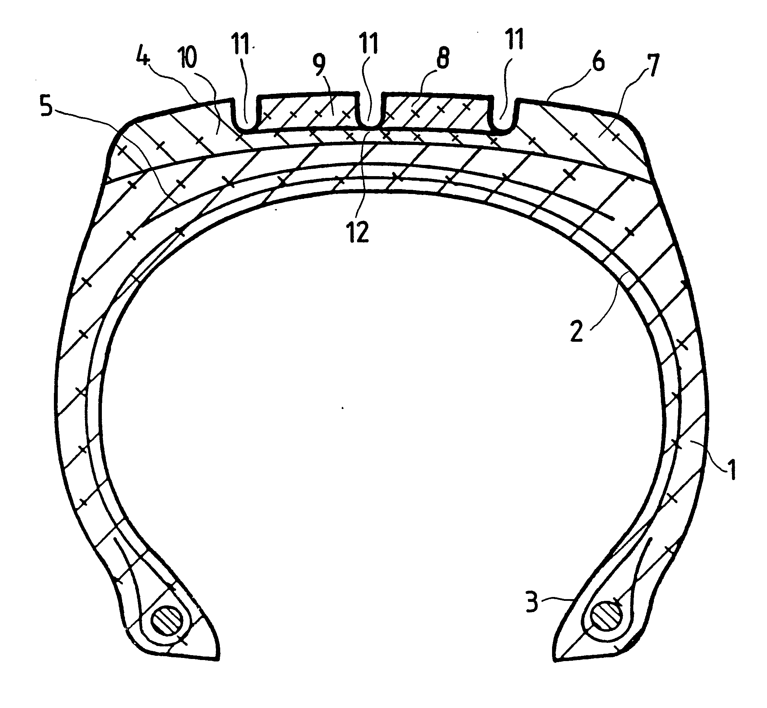

Weitere Einzelheiten der Erfindung werden anhand der Zeichnung erläutert, in der ein Ausführungsbeispiel der Erfindung dargestellt ist.

Die Abbildung zeigt einen radialen Teilschnitt durch einen Fahrzeugluftreifen für die Winterverwendung.

Der im wesentlichen aus Gummi oder gummiähnlichen Stoffen bestehende Reifenkörper 1 hat eine Radialkarkasse 2, die in den Reifenwülsten 3 verankert ist. Zwischen dem Laufstreifen 4 und der Radialkarkasse 2 befindet sich ein zugfester Gürtel 5, der den Reifen stabilisiert und in seinem Zenitbereich versteift.

Der Laufstreifen 4 hat über die Breite seiner Lauffläche 6 hinweg insgesamt gesehen eine gleichmäßige Wandstärke. Darüberhinaus wird er gebildet von vier Blockreihen 7, 8, 9 und 10, die durch Umfangsnuten 11 voneinander getrennt sind.

Um den Reifen wintertüchtig und zugleich unter diesen Voraussetzungen griffiger zu machen, werden die Blockreihen 7 und 10, darüber hinaus aber auch der diese Blockreihen verbindende Steg 12 unterhalb der Blockreihen 8 und 9 aus einem Synthesekautschuk mit einer Shore-Härte A von etwa 60 bis etwa 75 hergestellt. Die Blockreihen 8 und 9 hingegen, welche eine griffige Laufflächenmittelzone bilden sollen, bestehen aus Naturkautschuk mit einer vergleichsweise geringeren Härte, nämlich einer Härte von etwa 50 -65 Shore A.

Demgemäß ist die vorwiegend die Griffigkeit des Profils beeinflussende Mittelzone der Lauffläche 6 bezüglich ihres Volumens auf ein Mindestmaß gebracht, ohne dabei die Wirkung des Laufstreifens zu beeinflussen. Der übrige Teil des Laufstreifens 4 besteht hingegen aus einem Kautschuk höherer Wärmebeständigkeit, so daß demgemäß höhere Laufgeschwindigkeiten des Reifens zugelassen werden können.

Die Erfindung ermöglicht also einen Fahrzeugluftreifen für höhere Geschwindigkeiten, der über gute Wintereigenschaften verfügt.

## Ansprüche

1. Fahrzeugluftreifen mit einem Laufstreifen, wobei die beiden Randabschnitte des Laufstreifens gegenüber dem dazwischen befindlichen Abschnitt aus unterschiedlichen Gummimischungen bestehen, dadurch gekennzeichnet, daß der mittig gelegene Abschnitt (8, 9) auf einem Verbindungssteg (12) der beiden Randabschnitte (7, 10) angeordnet ist.

2. Reifen nach Anspruch 1, dadurch gekennzeichnet, daß der mittig gelegene Abschnitt (8, 9) im wesentlichen aus Naturkautschuk, die beiden Randabschnitte (7, 10) einschließlich des Verbindungsstegs (12) im wesentlichen aus Synthesekautschuk bestehen.

3. Reifen nach den Ansprüchen 1 und 2, dadurch gekennzeichnet, daß der Mittelabschnitt eine Shore-Härte A von etwa 50 bis 65, die Randabschnitte (7, 10) einschließlich Verbindungssteg eine Shore-Härte A von etwa 60 bis 75 aufweisen.

4. Reifen nach Anspruch 1, dadurch gekennzeichnet, daß die Wandstärke des Mittelabschnitts (8, 9) der Gravierungstiefe des Reifenprofils entspricht und der Mittelabschnitt von den seitlichen Abschnitten (7, 10) durch Nuten (11) getrennt ist.

5. Reifen nach Anspruch 1, dadurch gekennzeichnet, daß der Mittelabschnitt (8, 9) von in Umfangsrichtung aufeinander folgenden Profilblöcken gebildet ist.

86-22 P

CONTINENTAL
GUMMI WERKE AG
HANNOVER